# EUROPEAN PATENT APPLICATION

(11) **EP 2 891 995 A1**
(43) Date of publication of application: **08.07.2015**
(21) Application number: 15150037.8
(22) Date of filing: 02.01.2015
(51) Int. Cl.: G06F 17/30, G06Q 30/02

(54) **Systems and methods for search results targeting**

(30) Priority: 02.01.2014 US 201414146637
(71) Applicant: Yahoo! Inc., Sunnyvale, CA 94089 (US)
(72) Inventor: Li, Wentong, Saratoga, CA California 95070 (US); Ma, Lin, 100083 Haidian District (CN); Mao, Yi, Sunnyvale, CA California 94089 (US); Zhang, Weiru, 10083 Haidian District (CN)
(74) Representative: Fennell, Gareth Charles

(57) **Abstract**

Systems and methods are provided for search results targeting. The system includes a first database configured to store advertiser bidding information and a second database configured to store websites statistics generated by a search engine. The system includes one or more modules configured to: receive an input from an advertiser; obtain a plurality of advertiser keywords from the first database based on the input from the advertiser; rank the plurality of advertiser keywords; obtain a plurality of website identifiers for each top ranked advertiser keywords from a second database; rank the obtained website identifiers based on history statistics of the obtained website identifiers; and select the top ranked website identifiers as retargeting candidates for the advertiser.

## Description

### BACKGROUND

Advertisers use online advertising to increase the brand awareness or to drive the revenue for the advertiser. The common advertising campaign has certain targeting. There are two main targeting methods: 1. Content targeting - targeting based on the site content; and 2. Behavioral targeting - targeting based on user online behavior or derivative of the user online behavior.

The content targeting or contextual targeting commonly used by categorizes the site content based on a common taxonomy like Interactive Advertising Bureau (IAB) taxonomy. Then target the ad based on the taxonomy.

Retargeting is a form of behavioral targeted advertising, which is also known as behavioral remarketing or behavioral retargeting. Retargeting serves online ads to people more frequently after they have left an advertiser's website. Retargeting helps companies advertise to website visitors who leave without a conversion, which may include any result other than a sale.

Retargeting is done by displaying ads to the user as they browse the internet, via various ad networks that the agency buys media from on behalf of the advertisers. Generally, retargeting marks or tags online users who visit a certain brand website with data called a pixel or a cookie. When a user accesses a website with a cookie function for the first time, a cookie is sent from a server computer system to the browser and stored with the browser in the local terminal device. Later when the user goes back to the same website, the website will recognize the user because of the stored cookie with the user's information. A computer server system may serve banner ads only to the people if the pixel or cookie indicates an engagement in the original brand.

Conventional retargeting, however, requires user behavior data from cookies, which is not always available. Further, cookies may provide inaccurate information and cause other problems. For example, cookies may cause potential privacy concerns because it may be used to compile long-term records of individuals' browsing histories. Cookies may also store previously entered passwords, address, and credit card number. A hacker may use a cookie's data to gain access to user data or even gain access to the website to which the cookie belongs

Thus, the conventional online advertising systems fail to provide an effective targeting solution for advertisers when there is no user behavior data. It would be desirable to develop new systems and methods for targeting and retargeting.

### SUMMARY

In the disclosed method, the data from an advertiser database and a web searching database are used to identify right internet domains and/or sub-domains candidates for an advertiser. Thus, the computer system may show user targeted ads and further tag a user for targeting and/or retargeting when the user visits any of the candidates without additional user information.

In one aspect, a computer system is provided for targeting. The computer system includes a processor and a storage medium accessible to the hardware processor. The system includes a first database configured to store advertiser bidding information and a second database configured to store websites statistics generated by a search engine. The system includes one or more modules configured to: receive an input from an advertiser; obtain a plurality of advertiser keywords from the first database based on the input from the advertiser; rank the plurality of advertiser keywords; obtain a plurality of website identifiers for each top ranked advertiser keywords from a second database; rank the obtained website identifiers based on history statistics of the obtained website identifiers; and select the top ranked website identifiers as targeting candidates for the advertiser. Advantageously, a system is provided that enables an advertiser to target and/or retarget a user in a more reliable and/or secure manner. The system is also able to perform targeting and/or retargeting in a simplified manner.

In a second aspect, a method is provided for targeting implemented by one or more computing devices. In the computer implemented method, the one or more computing devices obtain, from a first database, a plurality of advertiser keywords based on an input from an advertiser. The one or more computing devices rank the plurality of advertiser keywords. The one or more computing devices obtain a plurality of website identifiers for each top ranked advertiser keywords from a second database. The one or more computing devices rank the obtained website identifiers based on history statistics of the obtained website identifiers. The one or more computing devices select the top ranked website identifiers as targeting candidates for the advertiser. Advantageously, a method is provided that enables an advertiser to target and/or retarget a user in a more reliable and/or secure manner. The method is also able to perform retargeting in a simplified manner.

In a third aspect, a computer-readable storage medium comprising a set of instructions is provided. Advantageously, a computer-readable storage medium is provided that enables a user to be targeted and/or retargeted in a more reliable and/or secure manner. The computer-readable storage medium also enables targeting and/or retargeting to be performed in a simplified manner.

### BRIEF DESCRIPTION OF THE DRAWINGS

FIG. 1 is an example computer system according to one embodiment of the disclosure;
FIG. 2A illustrates an example device for targeting;
FIG. 2B illustrates an example system for targeting;
FIG. 3 is an example block diagram illustrating embodiments of the disclosure; and
FIG. 4 is an example block diagram illustrating embodiments of the disclosure.

### DETAILED DESCRIPTION OF THE DRAWINGS

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" as used herein does not necessarily refer to a different embodiment. It is intended, for example, that claimed subject matter include combinations of example embodiments in whole or in part.

In general, terminology may be understood at least in part from usage in context. For example, terms, such as "and", "or", or "and/or," as used herein may include a variety of meanings that may depend at least in part upon the context in which such terms are used. Typically, "or" if used to associate a list, such as A, B or C, is intended to mean A, B, and C, here used in the inclusive sense, as well as A, B or C, here used in the exclusive sense. In addition, the term "one or more" as used herein, depending at least in part upon context, may be used to describe any feature, structure, or characteristic in a singular sense or may be used to describe combinations of features, structures or characteristics in a plural sense. Similarly, terms, such as "a," "an," or "the," again, may be understood to convey a singular usage or to convey a plural usage, depending at least in part upon context. In addition, the term "based on" may be understood as not necessarily intended to convey an exclusive set of factors and may, instead, allow for existence of additional factors not necessarily expressly described, again, depending at least in part on context.

The term "social network" refers generally to a network of individuals, such as acquaintances, friends, family, colleagues, or co-workers, coupled via a communications network or via a variety of sub-networks. Potentially, additional relationships may subsequently be formed as a result of social interaction via the communications network or sub-networks. A social network may be employed, for example, to identify additional connections for a variety of activities, including, but not limited to, dating, job networking, receiving or providing service referrals, content sharing, creating new associations, maintaining existing associations, identifying potential activity partners, performing or supporting commercial transactions, or the like.

A social network may include individuals with similar experiences, opinions, education levels or backgrounds. Subgroups may exist or be created according to user profiles of individuals, for example, in which a subgroup member may belong to multiple subgroups. An individual may also have multiple "1 :few" associations within a social network, such as for family, college classmates, or co-workers.

An individual's social network may refer to a set of direct personal relationships or a set of indirect personal relationships. A direct personal relationship refers to a relationship for an individual in which communications may be individual to individual, such as with family members, friends, colleagues, co-workers, or the like. An indirect personal relationship refers to a relationship that may be available to an individual with another individual although no form of individual to individual communication may have taken place, such as a friend of a friend, or the like. Different privileges or permissions may be associated with relationships in a social network. A social network also may generate relationships or connections with entities other than a person, such as companies, brands, or so-called 'virtual persons.' An individual's social network may be represented in a variety of forms, such as visually, electronically or functionally. For example, a "social graph" or "socio-gram" may represent an entity in a social network as a node and a relationship as an edge or a link.

For web portals like Yahoo!, advertisements may be displayed on web pages resulting from a user defined search based at least in part upon one or more search terms. Advertising may be beneficial to users, advertisers or web portals if displayed advertisements are relevant to interests of one or more users. Thus, a variety of techniques have been developed to infer user interest, user intent or to subsequently target relevant advertising to users. One approach to presenting targeted advertisements includes employing demographic characteristics (e.g., age, income, sex, occupation, etc.) for predicting user behavior, such as by group. Advertisements may be presented to users in a targeted audience based at least in part upon predicted user behavior(s).

Another approach includes profile type ad targeting. In this approach, user profiles specific to a user may be generated to model user behavior, for example, by tracking a user's path through a web site or network of sites, and compiling a profile based at least in part on pages or advertisements ultimately delivered. A correlation may be identified, such as for user purchases, for example. An identified correlation may be used to target potential purchasers by targeting content or advertisements to particular users.

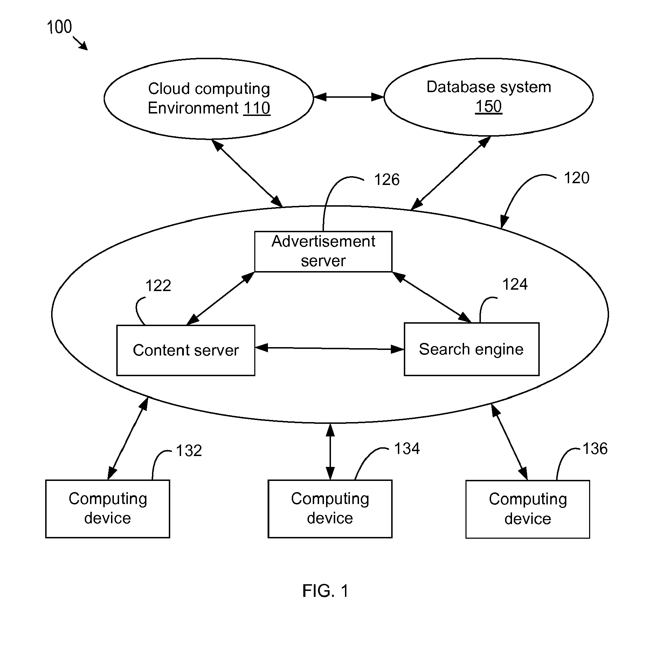

FIG. 1 is a block diagram of one embodiment of an environment 100 in which a system for targeting may operate. The system may implement a method for search results targeting and search results retargeting. However, it should be appreciated that the systems and methods described below are not limited to use with the particular example environment 100 shown in FIG. 1 but may be extended to a wide variety of implementations.

The environment 100 may include a cloud computing environment 110 and a connected server system 120 including a content server 122, a search engine 124, and an advertisement server 126. The server system 120 may include additional servers for additional computing or service purposes. For example, the server system 120 may include servers for social networks, online shopping sites, and any other online services.

The content server 122 may be a computer, a server, or any other computing device known in the art, or the content server 122 may be a computer program, instructions, and/or software code stored on a computer-readable storage medium that runs on a processor of a single server, a plurality of servers, or any other type of computing device known in the art. The content server 122 delivers content, such as a web page, using the Hypertext Transfer Protocol and/or other protocols. The content server 122 may also be a virtual machine running a program that delivers content.

The search engine 124 may be a computer system, one or more servers, or any other computing device known in the art, or the search engine 124 may be a computer program, instructions, and/or software code stored on a computer-readable storage medium that runs on a processor of a single server, a plurality of servers, or any other type of computing device known in the art. The search engine 124 is designed to help users find information located on the Internet or an intranet.

The advertisement server 126 may be a computer system, one or more servers, or any other computing device known in the art, or the advertisement server 126 may be a computer program, instructions and/or software code stored on a computer-readable storage medium that runs on a processor of a single server, a plurality of servers, or any other type of computing device known in the art. The advertisement server 126 is designed to provide digital ads to a web user based on display conditions requested by the advertiser.

The cloud computing environment 110 and the connected server system 120 have access to a database system 150. The database system 150 may include one or more databases. At least one of the databases in the database system may be an advertiser database that stores information related to advertiser keyword bidding by different advertisers. The advertiser database may also include advertiser spending and revenues generated for each keywords. For example, the advertiser database may include keywords on the advertiser's website, product information related to the advertiser, and bidding information of advertisers.

The database system may also include a web searching database. The web searching database may record search history data from the search engine 124. The web searching database may further include: keywords in the websites, product information in the websites, and product category in the websites. For each keyword, the web searching database may include a search volume, a click through rate, a cost per click, and revenue per search. The web searching database may also include other statistics for each websites.

The environment 100 may further include a plurality of computing devices 132, 134, and 136. The computing devices may be a computer, a smart phone, a personal digital aid, a digital reader, a Global Positioning System (GPS) receiver, or any other device that may be used to access the Internet.

An advertiser or any other user can use a computing device such as computing devices 132, 134, 136 to access information on the server system 120. The advertiser may send in an input identifying the product or service he can offer. The input may further identify a plurality of keywords related to the product or service. The server system 120 may use the input to find additional related advertiser keywords from the database system 150. The server system 120 may further rank the advertiser keywords and receive website from the database system for the top ranked advertiser keywords. These website identifiers may include a top level domain name and a sub-domain name. The website identifier may also include any identifier that identifies at least one webpage.

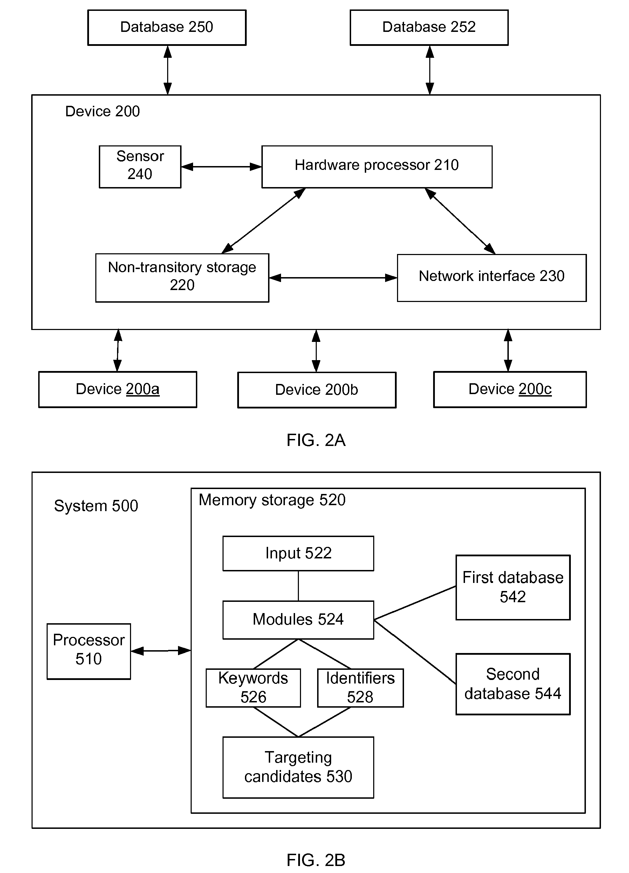

FIG. 2A illustrates an example device 200 for targeting. The device 200 may be a computer, a smartphone, a server, a terminal device, or any other computing device including a hardware processor 210, a non-transitory storage medium 220, and a network interface 230. The hardware processor 210 accesses the programs and data stored in the non-transitory storage medium 220. The device 200 may further include at least one sensor 240. The sensor 240 may include a converter that measures a physical quantity and converts it to a signal that can be understood by the device 200. For example, the sensor 240 may include a light sensor, a sound sensor, a gyroscope, an accelerometer, a barometer, a proximity sensor, a temperature sensor, or any other sensors.

The device 200 may communicate with other devices 200a, 200b, and 200c via the network interface 230. The device 200 may communicate with a first database 250 and a second database 252. The databases 250 and 252 may locate remotely or locally. In either case, the device 200 may access the databases 250 and 252 via a network, which may perform wired and wireless communications. The network may include computer networks, telephone networks, wireless networks, or any network that can be used to access databases. The first database 250 may store data related to advertisers bidding and the second database 252 may store data related to user activities on different web sites. The second database 252 may receive input from a search engine system.

FIG. 2B illustrates an example system 500 for selecting targeting candidates. The system 500 may include one or more devices such as the device 200 illustrated in FIG. 2A. For example, the system 500 includes a processor 510 and a storage medium 520 accessible to the processor 510. The storage medium 520 may include a non-transitory storage medium and a transitory storage medium. The storage medium 520 may include a plurality of data modules and program modules. The data modules may include input 522 from the advertiser, keywords 526 obtained from databases, and identifiers 528 identified by program modules 524. The program modules 524 may be implemented by the processor 510. The input 522 may include information of the product or service, competitor information, product or service categories, or any other information the advertiser would like the system 500 to use. The keywords 526 may include advertiser keywords related to products or services, search keywords, bidding keywords, or any other keyword stored in the databases. The identifiers 528 may include a domain name, a website address, an IP address, or any other web identifiers that can be used to identify a website.

For example, the system 500 may obtain a plurality of advertiser keywords from the first database 542 based on the input from the advertiser. The program modules 524 then rank the plurality of advertiser keywords. The ranking may be based on various metrics in a search market place. The program modules 524 may obtain a plurality of website identifiers for each top ranked advertiser keywords from the second database 544. The plurality of website identifiers may be stored in a search engine database. Alternatively or additionally, the plurality of website identifiers may be stored in a social network database or any other databases including keywords and website identifiers. The program modules 524 may rank the obtained website identifiers based on history statistics of the obtained website identifiers. The program modules 524 may select the top ranked website identifiers as targeting candidates 530 for the advertiser. The program modules 524 may present targeting ads to users visiting the selected targeting candidates. After the users left the targeting candidates, the program modules 524 may further present retargeting ads to the user left without a conversion.

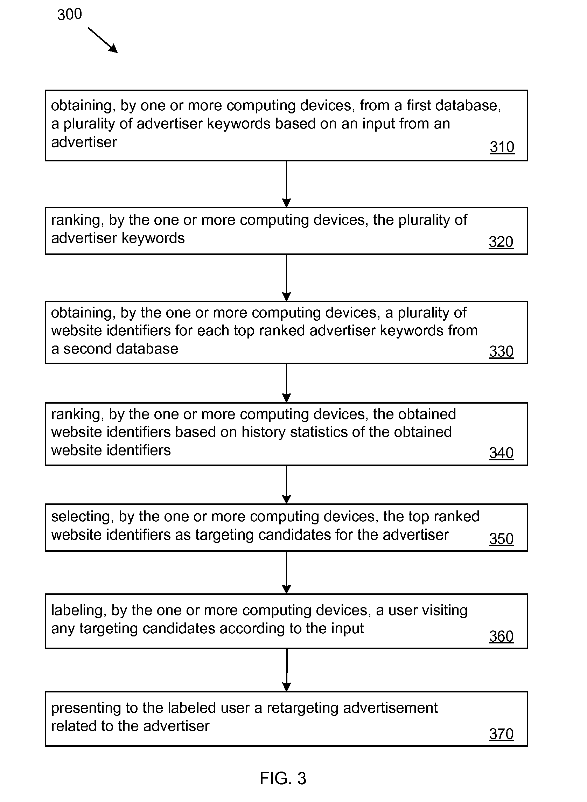

FIG. 3 shows an example block diagram 300 illustrating embodiments of the disclosure. A corresponding method may be implemented by a device or a computer system illustrated above. Other steps may be added or substituted.

In step 310, the device obtains a plurality of advertiser keywords based on an input from an advertiser, where the plurality of advertiser keywords is stored in a first database. The first database may relate to a search marketplace operated by Yahoo!. The first database may include information relates to advertiser keywords bidding information and amount spent on each advertiser keyword.

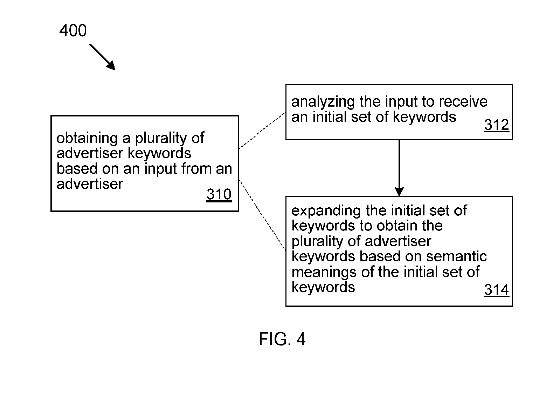

The input from the advertiser may only include a very brief summary of the product or service. In that case, as illustrated in step 312 of FIG. 4, the device may first analyze the input to receive an initial set of keywords. For example, the device may use pattern recognition, natural language processing, or other signal processing method to analyze the input and identify an initial set of keywords from the analysis.

The input from the advertiser may include a few keywords, detailed information, images, past advertisement, the ads to be displayed, and any additional information from the advertiser. The device may use all the above information from the advertiser to identify more keywords related to the advertiser.

Once the initial set of keywords is identified, in step 314 of FIG. 4, the device may expand the initial set of keywords to obtain the plurality of advertiser keywords based on semantic meanings of the initial set of keywords. The device may expand the initial set of keywords by including words with similar meanings, similar brands, competitor products or services, or other terms related to the initial keywords. For example, a keyword set including "running shoes" may be expanded to include "walking shoes, sports shoes, cross-training shoes, marathon shoes" and brands names related to running.

The device may further expand the initial set of keywords to introduce words with typographical errors or common misspellings, words in different order, or non-semantic terms related to the advertiser. The non-semantic terms may include at least one of the following: geographical location of the advertiser, popular names related to the product or service, and age information related to the product or service.

In step 320, the device ranks the plurality of advertiser keywords based on information from different advertisers. The information may include past spend on each advertiser keyword, number of bidding times by different advertisers, cost information for each click, revenue generated for each keyword, and other available information. For example, the device may rank the plurality of advertiser keywords based on at least one of the following: search volume, click through rate, cost per click, and revenue per search. The keyword may be ranked higher with a larger search volume, a higher click through rate, a higher cost per click, or higher revenue per search.

In step 330, the device obtains a plurality of website identifiers for each top ranked advertiser keywords from a second database. The second database may be a database related to a search engine, a social network server, and other computer servers. For example, the second database may store domain level page rank, spam score, and commercial intent of past visitors to a website. The page rank may be calculated by a search engine to measure the importance of website pages at a top-domain level or a sub-domain level. The spam score may be calculated by the device to determine the likelihood of receiving spam emails from the website identified by the website identifier. A website may be ranked higher with a higher page rank and a lower spam score. In other words, the page rank is a positive factor while the spam score is a negative factor.

The commercial intent of past web visitors may be tracked by conversion pixel or cookie that tracks user online purchase behavior in display campaigns. The pixel or cookie may track what kind of products the web visitors buy or added to the shopping car. The tracked information may also include the browsing times each visitor spent on specific sub-domain or specific products.

The website identifier includes at least one of a top level domain name and a sub-domain name. For large websites that include thousands of different products, a sub-domain name may be necessary to match the advertiser's specific product. When the advertiser's products are "sports shoes," for example, a sub-domain name to identify the shoe department of a large online store may be necessary. Thus, for a general web site, it is not easy to identify user/advertiser commercial intent for a specific advertiser because the domain includes so many kinds of products. It may be necessary for the device to collapse and roll up the results to the domain and subdomain level.

In step 340, the device ranks the obtained website identifiers based on history statistics of the obtained website identifiers. The history statistics may include at least one of the following: a click through rate of a keyword in the webpage, domain level page rank, spam score, commercial intent of past visitors to a website, or other statistical information or business information accessible to the device.

In step 350, the device selects the top ranked website identifiers as targeting candidates for the advertiser. The device may provide the advertiser a list of website names as targeting candidates. The device may also automatically target the user visiting any of these websites with the advertiser's product or service. The advertiser may buy additional targeting and/or retargeting ads or bid for banner ads on these targeting websites.

In step 360, the device labels a user visiting any targeting candidates according to the input. When a user visits any targeting candidates, a cookie may be used to tag the user so that another device or computer system may retarget the user with other products or services from the advertiser. This may also be combined with an email system or other systems. For example, when an email from a targeting candidate website was read by a user, the user may also be labeled for future retargeting. The device may label the user by other methods such as server logs or tags.

In step 370, the device presents to the labeled user a retargeting advertisement related to the advertiser. The device may analyze user behavior from the cookie or pixel and present an online advertisement to the labeled user.

The disclosed systems and methods may be used for search results targeting and/or search results retargeting. The disclosed system has the following advantages. The system provides targeting and/or retargeting without any user behavior from cookies. Rather, the system identifies highly correlated websites using both advertiser bidding information from an advertising system and websites statistics from a search engine system.

Further aspects of the present disclosure are set out in the following numbered clauses:
1. A storage medium configured to store a set of instructions, the set of instructions to direct a computer system to perform acts of:
   obtaining from a first database, a plurality of advertiser keywords based on an input from an advertiser;
   ranking the plurality of advertiser keywords;
   obtaining a plurality of website identifiers for each top ranked advertiser keywords from a second database;
   ranking the obtained website identifiers based on history statistics of the obtained website identifiers; and
   selecting the top ranked website identifiers as targeting candidates for the advertiser.
2. The storage medium of clause 1, wherein the set of instructions direct the computer system to label a user visiting any targeting candidates according to the input.
3. The storage medium of clause 2, wherein the set of instructions direct the computer system to present to the labeled user a retargeting advertisement related to the advertiser.
4. The storage medium of any of clauses 1 to 3, wherein obtaining the plurality of advertiser keywords based on the input comprises:
   analyzing the input to receive an initial set of keywords; and
   expanding the initial set of keywords to obtain the plurality of advertiser keywords based on semantic meanings of the initial set of keywords.

The storage medium may be a computer-readable storage medium and may be transitory and/or non-transitory.

It is therefore intended that the foregoing detailed description be regarded as illustrative rather than limiting, and that it be understood that the detailed description should not be used to limit the scope of the invention.

## Claims

1. A system (500) comprising a processor and a storage medium accessible to the processor, the system comprising:
a first database (542) configured to store advertiser bidding information;
a second database (544) configured to store websites statistics generated by a search engine; and
one or more modules (524) configured to:
receive an input (522) from an advertiser;
obtain a plurality of advertiser keywords from the first database (542) based on the input (522) from the advertiser;
rank the plurality of advertiser keywords;
obtain a plurality of website identifiers for each top ranked advertiser keywords from the second database (544);
rank the obtained website identifiers based on history statistics of the obtained website identifiers; and
select the top ranked website identifiers as targeting candidates for the advertiser.

2. The system (500) of claim 1, wherein the system is further configured to label a user visiting any targeting candidates according to the input (522).

3. The system (500) of claim 2, wherein the system is configured to present to the labeled user a retargeting advertisement related to the advertiser.

4. The system (500) of any of claims 1 to 3, wherein the first database (542) is configured to store at least one of the following:
keywords on the advertiser's website,
product information related to the advertiser, and
bidding information of advertisers.

5. The system (500) of any of claims 1 to 4, wherein the system is configured to rank the plurality of advertiser keywords based on at least one of the following:
search volume,
click through rate,
cost per click, and
revenue per search.

6. The system (500) of any of claims 1 to 5, wherein the plurality of website identifiers comprises at least one of:
a top level domain name, and
a sub-domain name.

7. The system (500) of any of claims 1 to 6, wherein the second database (544) is configured to store at least one of the following:
domain level page rank,
spam score, and
commercial intent of past visitors to a website.

8. The system (500) of any of claims 1 to 7, wherein the operation of obtaining the plurality of advertiser keywords based on the input (522) comprises:
analyze the input (522) to receive an initial set of keywords; and
expand the initial set of keywords to obtain the plurality of advertiser keywords based on semantic meanings of the initial set of keywords.

9. A method comprising:
obtaining (310), by one or more computing devices, from a first database, a plurality of advertiser keywords based on an input from an advertiser;
ranking (320), by the one or more computing devices, the plurality of advertiser keywords;
obtaining (330), by the one or more computing devices, a plurality of website identifiers for each top ranked advertiser keywords from a second database;
ranking (340), by the one or more computing devices, the obtained website identifiers based on history statistics of the obtained website identifiers; and
selecting (350), by the one or more computing devices, the top ranked website identifiers as targeting candidates for the advertiser.

10. The method of claim 9, further comprising:
labeling (360), by the one or more computing devices, a user visiting any targeting candidates according to the input; and optionally
presenting (370) to the labeled user a retargeting advertisement related to the advertiser.

11. The method of claim 9 or 10, wherein the first database is configured to store at least one of the following:
keywords on the advertiser's website,
product information related to the advertiser, and
bidding information of advertisers.

12. The method of any of claims 9 to 11, wherein ranking the plurality of advertiser keywords comprises ranking the plurality of advertiser keywords based on at least one of the following:
search volume,
click through rate,
cost per click, and
revenue per search; and optionally
wherein the plurality of website identifiers comprises at least one of:
a top level domain name, and
a sub-domain name.

13. The method of any of claims 9 to 11, wherein the second database is configured to store at least one of the following:
domain level page rank,
spam score, and
commercial intent of past visitors to a website.

14. The method of any of claims 9 to 13, wherein obtaining the plurality of advertiser keywords based on the input comprises:
analyzing (312) the input to receive an initial set of keywords; and
expanding (314) the initial set of keywords to obtain the plurality of advertiser keywords based on semantic meanings of the initial set of keywords.

15. A computer-readable storage medium comprising a set of instructions to implement the method of any of claims 9 to 14.
